# EUROPEAN PATENT APPLICATION

(11) **EP 4 793 499 A1**
(43) Date of publication of application: **19.08.2026**
(21) Application number: 24894203.9
(22) Date of filing: 21.11.2024
(51) Int. Cl.: F04B 39/00, F04B 15/08, F04B 49/10

(54) **LIQUEFIED HYDROGEN PUMP SYSTEM AND METHOD FOR CONTROLLING LIQUEFIED HYDROGEN PUMP SYSTEM**

(30) Priority: 22.11.2023 JP 2023198546
(71) Applicant: Mitsubishi Heavy Industries, Ltd., Chiyoda-ku Tokyo 100-8332 (JP)
(72) Inventor: HORI, Takumi, Tokyo 100-8332 (JP); MAEDA, Akio, Tokyo 100-8332 (JP); MATSUBAYASHI, Toshiki, Tokyo 100-8332 (JP); ASAI, Hideaki, Tokyo 100-8332 (JP); SUITA, Tohru, Tokyo 100-8332 (JP); HARADA, Motoshi, Tokyo 100-8332 (JP)
(74) Representative: Studio Torta S.p.A.
(86) International application number: PCT/JP2024/041305
(87) International publication number: WO 2025/110212

(57) **Abstract**

A liquefied hydrogen pump system includes a liquefied hydrogen pump and a control device, and the liquefied hydrogen pump includes a cylinder, a piston, a rod, a drive unit, and a seal unit. The seal unit includes a first seal member, a second seal member that is provided at a distance from the first seal member in a direction away from the piston in a direction of an axis, a flow passage portion of which one end communicates with a gap between the rod and the cylinder and the other end is open to an outside of the cylinder, and an information acquisition unit that acquires information on a hydrogen concentration in a fluid flowing out of the cylinder through the flow passage portion. The control device stops an operation of the liquefied hydrogen pump in a case where it is determined, based on the acquired information on the hydrogen concentration, that the hydrogen concentration in the fluid exceeds a preset reference value.

## Description

### TECHNICAL FIELD

The present disclosure relates to a liquefied hydrogen pump system and a method for controlling the liquefied hydrogen pump system. Priority is claimed on Japanese Patent Application No. 2023-198546, filed November 22, 2023, the content of which is incorporated herein by reference.

### BACKGROUND ART

A reciprocating pump has been used as a liquefied hydrogen pump for compressing liquefied hydrogen. This type of pump is configured to be capable of boosting the liquefied hydrogen to about 90 MPa, for example. Specifically, the reciprocating pump mainly includes a piston that reciprocates in the direction of an axis and a cylinder that covers the piston from the outside. As the piston reciprocates in the cylinder, the liquefied hydrogen is compressed and discharged to the outside. The piston is driven by a drive unit. The piston provided in the cylinder and the drive unit provided outside the cylinder are connected to each other via a rod. The rod extends to penetrate the inside and the outside of the cylinder.

For example, Patent Document 1 discloses a configuration in which a plurality of seal members are provided between the rod and the cylinder at intervals in the direction of the axis of the rod in this type of liquefied hydrogen pump. Further, Patent Document 1 discloses a configuration in which a pressure in a fluid flow passage communicating with spaces between the plurality of seal members is monitored. In such a configuration, the leakage of the liquefied hydrogen through a gap between the seal member and the rod, which is caused by the wear of the seal member, is monitored through the detection of an increase in the pressure in the fluid flow passage.

### Prior Art Documents

### Patent Document

Patent Document 1: Japanese Patent No. 6982034

### SUMMARY OF INVENTION

### Problems to be Solved by the invention

Further, in the liquefied hydrogen pump as described above, it is required to suppress a hydrogen concentration in the surrounding atmospheric air to a value equal to or smaller than a predetermined reference value even in a case where hydrogen leaks from the liquefied hydrogen pump into the atmospheric air.

However, in the configuration disclosed in Patent Document 1, the presence or absence of leakage of the liquefied hydrogen can be monitored but the hydrogen concentration in the surrounding atmospheric air cannot be detected in a case where the liquefied hydrogen leaks from the liquefied hydrogen pump into the atmospheric air.

The present disclosure has been made to solve the above-described problems, and an object of the present disclosure is to provide a liquefied hydrogen pump system and a method for controlling the liquefied hydrogen pump system that can suppress a hydrogen concentration in the surrounding atmospheric air to a value equal to or smaller than a predetermined reference value by detecting a change in the hydrogen concentration in a case where liquefied hydrogen leaks.

### Means for Solving the Problem

In order to solve the above-described problems, a liquefied hydrogen pump system according to an aspect of the present disclosure includes a liquefied hydrogen pump configured to compress liquefied hydrogen and a control device configured to control an operation of the liquefied hydrogen pump, in which the liquefied hydrogen pump includes a tubular cylinder extending in a direction of an axis, a piston provided in the cylinder to be reciprocable in the direction of the axis, configured to compress the liquefied hydrogen introduced into the cylinder from an outside, and configured to discharge the liquefied hydrogen to an outside of the cylinder, a rod of which one end is connected to the piston in the cylinder and the other end protrudes to the outside of the cylinder, a drive unit connected to the other end of the rod and configured to cause the piston to reciprocate in the direction of the axis in the cylinder via the rod, and a seal unit. The seal unit includes a first seal member configured to seal a gap between the rod and the cylinder, a second seal member provided at a distance from the first seal member in a direction away from the piston in the direction of the axis and configured to seal the gap between the rod and the cylinder, a flow passage portion which is formed in the cylinder and of which one end communicates with the gap between the rod and the cylinder at a position between the first seal member and the second seal member, and the other end is open to the outside of the cylinder, and an information acquisition unit configured to acquire information on a hydrogen concentration in a fluid flowing out of the cylinder through the flow passage portion; and the control device stops the operation of the liquefied hydrogen pump in a case where it is determined, based on the information on the hydrogen concentration acquired by the information acquisition unit, that the hydrogen concentration in the fluid exceeds a preset reference value.

A method for controlling the liquefied hydrogen pump system according to another aspect of the present disclosure is a method for controlling the liquefied hydrogen pump system described above that includes a step of acquiring the information on the hydrogen concentration in the fluid flowing out of the cylinder through the flow passage portion, a step of determining whether or not the hydrogen concentration in the fluid exceeds the preset reference value based on the acquired information on the hydrogen concentration, and a step of stopping the operation of the liquefied hydrogen pump in a case where it is determined that the hydrogen concentration in the fluid exceeds the preset reference value.

### Effects of Invention

According to the liquefied hydrogen pump system and the method for controlling the liquefied hydrogen pump system of the present disclosure, it is possible to suppress a hydrogen concentration in the surrounding atmospheric air to a value equal to or smaller than a predetermined reference value by detecting a change in the hydrogen concentration in a case where liquefied hydrogen leaks.

### BRIEF DESCRIPTION OF DRAWINGS

[FIG. 1] A cross-sectional view showing a schematic configuration of a liquefied hydrogen pump system according to an embodiment of the present disclosure.
[FIG. 2] A cross-sectional view showing a configuration of a seal unit provided in a liquid hydrogen pump of the liquefied hydrogen pump system according to a first embodiment of the present disclosure.
[FIG. 3] A cross-sectional view taken along line III-III of FIG. 2.
[FIG. 4] A diagram showing a hardware configuration of a control device according to the embodiment of the present disclosure.
[FIG. 5] A functional block diagram showing a functional configuration of the control device shown in FIG. 4.
[FIG. 6] A flowchart showing a procedure of a method for controlling the liquefied hydrogen pump system according to the first embodiment of the present disclosure.
[FIG. 7] A cross-sectional view showing a configuration of a seal unit provided in a liquid hydrogen pump of a liquefied hydrogen pump system according to a second embodiment of the present disclosure.
[FIG. 8] A diagram showing an example of a correlation between a temperature of a fluid and a flow rate of the fluid.
[FIG. 9] A flowchart showing a procedure of a method for controlling the liquefied hydrogen pump system according to the second embodiment of the present disclosure.
[FIG. 10] A cross-sectional view showing a configuration of a seal unit provided in a liquid hydrogen pump of a liquefied hydrogen pump system according to a third embodiment of the present disclosure.
[FIG. 11] A flowchart showing a procedure of a method for controlling the liquefied hydrogen pump system according to the third embodiment of the present disclosure.
[FIG. 12] A cross-sectional view showing a configuration of a seal unit provided in a liquid hydrogen pump of a liquefied hydrogen pump system according to a first modification example of the embodiment of the present disclosure.
[FIG. 13] A cross-sectional view showing a configuration of a seal unit provided in a liquid hydrogen pump of a liquefied hydrogen pump system according to a second modification example of the embodiment of the present disclosure.

### DESCRIPTION OF EMBODIMENTS

Liquefied hydrogen pump systems and methods for controlling the liquefied hydrogen pump systems according to embodiments of the present disclosure will be described below with reference to the accompanying drawings. However, the present disclosure is not limited to only these embodiments.

### (First Embodiment)

### (Configuration of Liquefied Hydrogen Pump System)

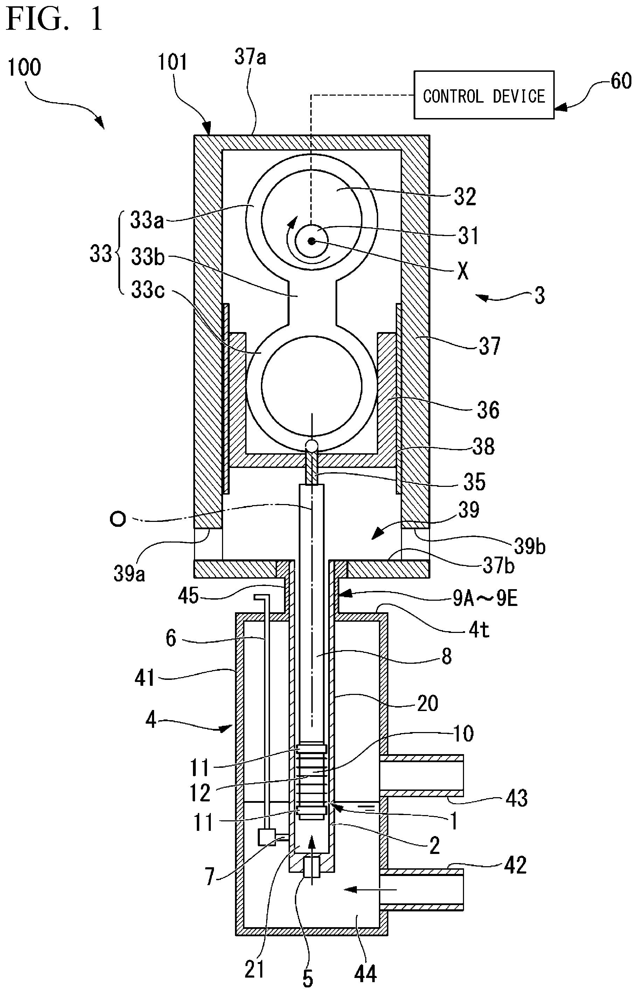

As shown in FIG. 1, a liquefied hydrogen pump system 100 includes a liquefied hydrogen pump 101 and a control device 60.

### (Configuration of Liquefied Hydrogen Pump)

The liquefied hydrogen pump 101 is a reciprocating pump for boosting the pressure of liquefied hydrogen to a high pressure (for example, about 90 MPa). The liquefied hydrogen pump 101 mainly includes a piston 1, a cylinder 2, a rod 8, a drive unit 3, a casing 4, and a seal unit 9A.

### (Configuration of Piston)

The piston 1 includes a columnar piston body 10 centered on an axis O extending in an up-down direction, wear rings 11 attached to the piston body 10, and piston rings 12. The dimension of the piston body 10 in a radial direction is constant over the entire region in a direction of the axis O. The wear rings 11 are provided at a distal end portion of the piston body 10. The wear rings 11 have an annular shape centered on the axis O and are made of a resin material.

One wear ring 11 is provided at a lower end portion of the piston body 10, and another wear ring 11 is provided at a distance from the wear ring 11 in the direction of the axis O. A plurality of (for example, six) piston rings 12 arranged at intervals in the direction of the axis O are provided between the pair of wear rings 11. The wear rings 11 are provided to guide the piston body 10 along an inner peripheral surface of a cylinder body 20 to be described later. On the other hand, the piston rings 12 are provided to maintain liquid-tightness and gas-tightness against the inner peripheral surface of the cylinder body 20.

### (Configuration of Cylinder)

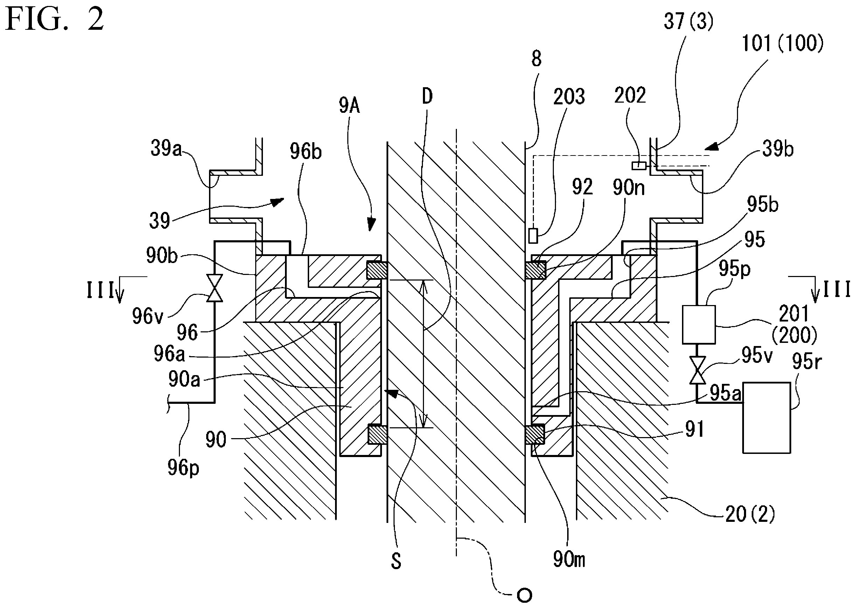

The cylinder 2 includes a cylinder body 20 and a seal unit body 90 (see FIG. 2) to be described later. The cylinder body 20 has a tubular shape extending in the direction of the axis O along the axis O. The cylinder body 20 has a bottomed cylindrical shape that covers the piston 1 from an outer peripheral side. The piston 1 is inserted into an interior of the cylinder body 20 from an upper opening portion of the cylinder body 20. A space below the piston 1 inside the cylinder body 20 is defined as a compression chamber 21. A check valve 5 for guiding liquefied hydrogen to the compression chamber 21 is provided at a bottom portion of the cylinder body 20. The check valve 5 is configured to allow the liquefied hydrogen to flow only in a direction from the outside of the cylinder body 20 into the compression chamber 21. In other words, even though the pressure of the compression chamber 21 increases, the liquefied hydrogen does not flow out of the cylinder body 20 through the check valve 5.

A discharge pipe 6 is connected to a portion of a side surface of the cylinder body 20 facing the compression chamber 21 described above. The discharge pipe 6 is provided to take out the liquefied hydrogen, which is compressed in the compression chamber 21, to the outside of the cylinder body 20. A discharge valve 7 is provided in the middle of the discharge pipe 6. The discharge valve 7 is configured to allow the liquefied hydrogen to flow only in a direction from the compression chamber 21 toward the outside in a case where the pressure in the compression chamber 21 is equal to or greater than a predetermined value.

### (Configuration of Rod)

The rod 8 connects the piston 1 and the drive unit 3. The rod 8 is formed in a columnar shape extending in the direction of the axis O. One end of the rod 8 is connected to the piston body 10 of the piston 1 in the cylinder 2. The other end of the rod 8 protrudes upward from the upper end of the cylinder 2. The other end of the rod 8 is connected to a swing shaft part 35 of the drive unit 3 in a housing 37 of the drive unit 3. The piston 1 and the rod 8 are configured to be movable along the direction of the axis O in the cylinder 2.

### (Configuration of Drive Unit)

The drive unit 3 causes the piston 1 and the rod 8 to reciprocate in the direction of the axis O in the cylinder body 20. The drive unit 3 includes an eccentric shaft part 31, a rotating body 32, a link unit 33, a crosshead 36, and a housing 37.

The eccentric shaft part 31 is driven to rotate about a rotation axis X (central axis), which extends in a horizontal direction orthogonal to the axis O, by an electric motor (not shown). The eccentric shaft part 31 has a columnar shape centered on the rotation axis X. The rotating body 32 is provided integrally with the eccentric shaft part 31 and has a disc shape centered on an axis different from the rotation axis X. That is, the rotation axis X of the eccentric shaft part 31 is provided at an eccentric position relative to the center of the rotating body 32. As the eccentric shaft part 31 is driven to rotate, the rotating body 32 rotates about the rotation axis X.

The link unit 33 is a member for converting the rotating motion of the rotating body 32 into the reciprocating motion in the direction of the axis O and transmitting the reciprocating motion to the piston 1. The link unit 33 includes an upper annular part 33a having an annular shape that covers the rotating body 32 from the outer peripheral side, a connecting part 33b, and a lower annular part 33c.

A bearing device (not shown) is provided between the inner peripheral surface of the upper annular part 33a and the outer peripheral surface of the rotating body 32. The upper annular part 33a revolves about the rotation axis X together with the rotating body 32. The lower annular part 33c has an annular shape similar to the upper annular part 33a and is integrally connected to the upper annular part 33a by the connecting part 33b. The lower annular part 33c is accommodated in the crosshead 36. The crosshead 36 has a bottomed cylindrical shape that covers the lower annular part 33c from the outside. The crosshead 36 is provided to be movable in the direction of the axis O in the housing 37 to be described later. As the upper annular part 33a revolves about the rotation axis X, the lower annular part 33c reciprocates in the direction of the axis O together with the crosshead 36 in the housing 37 while rotating in the crosshead 36 to be described later. The swing shaft part 35 is attached to a lower end of the lower annular part 33c. A lower end portion of the swing shaft part 35 is connected to the other end of the rod 8. The swing shaft part 35 is configured to be swingable about a swing shaft extending in the horizontal direction orthogonal to the axis O with respect to the lower annular part 33c.

The housing 37 is formed to cover the eccentric shaft part 31, the rotating body 32, the link unit 33, and the crosshead 36. The housing 37 has a tubular shape extending in the direction of the axis O, and both end portions thereof in the direction of the axis O are closed by a top plate 37a and a bottom plate 37b.

A wear band 38 is provided between an outer peripheral surface of the crosshead 36 and an inner peripheral surface of the housing 37. The wear band 38 is a member having the same function and material as the wear rings 11 described above.

An atmospheric air flow portion 39 is formed in a lower portion of the housing 37. The atmospheric air flow portion 39 is formed to penetrate the housing 37 in a direction intersecting the direction of the axis O. The atmospheric air flow portion 39 includes an atmospheric air inlet 39a and an atmospheric air outlet 39b. The atmospheric air inlet 39a is formed on one side of the housing 37 in a radial direction intersecting the direction of the axis O to penetrate the inside and outside of the housing 37. The atmospheric air outlet 39b is formed on the other side of the housing 37 in the radial direction intersecting the direction of the axis O to penetrate the inside and outside of the housing 37. Atmospheric air is introduced into a space, which is positioned below the crosshead 36 in the housing 37, through the atmospheric air inlet 39a of the atmospheric air flow portion 39 by a fan, a blower, or the like (not shown). The atmospheric air introduced into the housing 37 is discharged to the outside of the housing 37 through the atmospheric air outlet 39b. Accordingly, the lower portion in the housing 37 is ventilated.

### (Configuration of Casing)

The casing 4 covers the above-described cylinder body 20 from the outside. The casing 4 includes a bottomed tubular casing body 41, a supply pipe 42, and a gas discharge pipe 43. The supply pipe 42 is a pipe for guiding the liquefied hydrogen from an external supply source into the casing body 41. The liquefied hydrogen introduced into the casing body 41 through the supply pipe 42 is stored in a liquid storage chamber 44 provided at the bottom portion in the casing body 41. The supply pipe 42 is provided in the vicinity of the bottom surface of the casing body 41. The gas discharge pipe 43 is provided to discharge a component (gas component), which is vaporized in the liquid storage chamber 44, to the outside. The gas discharge pipe 43 is provided at a position spaced above the supply pipe 42. Further, the liquid level of the liquefied hydrogen in the liquid storage chamber 44 is adjusted to be positioned below the gas discharge pipe 43. The discharge pipe 6 described above extends to the outside of the casing 4.

A tubular portion 45 is formed at an upper end portion of the casing 4. The tubular portion 45 protrudes upward from the upper surface 4t of the casing 4 along the direction of the axis O. An upper end of the tubular portion 45 is connected to the bottom plate 37b of the housing 37. An upper end portion of the cylinder body 20 is accommodated in the tubular portion 45. The rod 8 extends upward in the housing 37 from the upper end portion of the cylinder body 20.

In a case where such a liquefied hydrogen pump 101 is to be operated, the piston 1 is caused to reciprocate in the cylinder body 20 by the drive unit 3 in a state in which the liquefied hydrogen is first supplied from the outside of the casing 4 into the casing 4 through the supply pipe 42. Accordingly, the liquefied hydrogen stored in the liquid storage chamber 44 is sucked into the cylinder body 20 through the check valve 5. The piston 1 compresses the liquefied hydrogen, which is introduced into the cylinder body 20 from the outside, to bring the liquefied hydrogen into a high-pressure state. The liquefied hydrogen brought into the high-pressure state is discharged to the outside through the discharge valve 7 via the discharge pipe 6 by the operation of the piston 1.

### (Configuration of Seal Unit)

As shown in FIG. 2, the seal unit 9A is to seal a gap between the cylinder 2 and the rod 8. The seal unit 9A includes the seal unit body 90, a first seal member 91, a second seal member 92, a flow passage portion 95, and an inert gas supply flow passage portion 96.

The seal unit body 90 is fitted into an opening provided at the upper end of the cylinder body 20. The seal unit body 90 integrally includes an insertion tube portion 90a and an enlarged-diameter portion 90b.

The insertion tube portion 90a is inserted into the cylinder body 20 from the opening provided at the upper end of the cylinder body 20. The insertion tube portion 90a is formed in a cylindrical shape extending in the direction of the axis O. An inner peripheral surface of the insertion tube portion 90a is formed to be spaced apart radially outward from an outer peripheral surface of the rod 8. Accordingly, a cylindrical gap S is formed between the insertion tube portion 90a forming a part of the cylinder body 20 and the rod 8.

The enlarged-diameter portion 90b is enlarged from the upper end of the insertion tube portion 90a toward the outside in the radial direction about the axis O. The enlarged-diameter portion 90b is provided to close the opening provided at the upper end of the cylinder body 20 from above. Although the seal unit body 90 is attached to the upper end portion of the cylinder body 20 in the embodiment of the present disclosure, the same configuration as the seal unit body 90 may be integrally formed at the upper end portion of the cylinder body 20.

The first seal member 91 and the second seal member 92 are provided on the inner peripheral surface of the insertion tube portion 90a.

The first seal member 91 is accommodated in a groove 90m formed on the inner peripheral surface of the lower end portion of the insertion tube portion 90a. The first seal member 91 is formed in an annular shape that is continuous in the circumferential direction around the axis O. The first seal member 91 protrudes radially inward from the inner peripheral surface of the insertion tube portion 90a and is in sliding contact with the outer peripheral surface of the rod 8. The first seal member 91 seals a space between the rod 8 and the seal unit body 90 forming a part of the cylinder 2.

The second seal member 92 is provided at a distance from the first seal member 91 in a direction (upward) away from the piston 1 in the direction of the axis O. The second seal member 92 is accommodated in a groove 90n formed on the inner peripheral surface of the upper end portion of the insertion tube portion 90a. The second seal member 92 is formed in an annular shape that is continuous in the circumferential direction around the axis O. The second seal member 92 protrudes radially inward from the inner peripheral surface of the insertion tube portion 90a and is in sliding contact with the outer peripheral surface of the rod 8. The second seal member 92 seals a space between the rod 8 and the seal unit body 90 provided in the cylinder body 20.

The interval D between the first seal member 91 and the second seal member 92 in the direction of the axis O is larger than the moving stroke of the rod 8, which is driven together with the piston 1 by the drive unit 3, in the direction of the axis O.

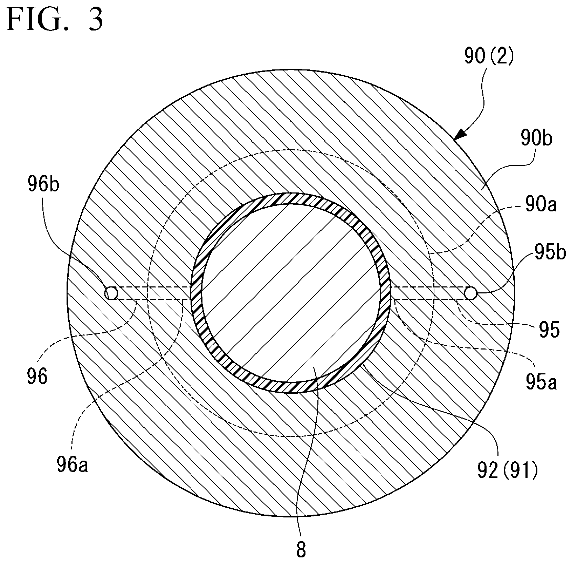

As shown in FIGS. 2 and 3, the flow passage portion 95 is formed in the seal unit body 90. The flow passage portion 95 is formed on one side of the axis O in the radial direction. The flow passage portion 95 is provided such that one end 95a thereof communicates with the gap S between the rod 8 and the cylinder 2 at a position between the first seal member 91 and the second seal member 92. In the embodiment of the present disclosure, one end 95a of the flow passage portion 95 is formed above the first seal member 91 at the lower end portion of the insertion tube portion 90a. That is, one end 95a is formed to face the lower end portion of the gap S. The flow passage portion 95 extends radially outward from one end 95a. The other end 95b of the flow passage portion 95 is open to the outside of the cylinder 2. In the embodiment of the present disclosure, the other end 95b of the flow passage portion 95 is open to, for example, the upper surface of the enlarged-diameter portion 90b. One end of a pipe 95p is connected to the other end 95b of the flow passage portion 95. An on-off valve 95v is provided in the middle of the pipe 95p. The other end of the pipe 95p is connected to a hydrogen collection unit 95r. In a case where hydrogen leaks from the cylinder body 20 side through a gap between the first seal member 91 and the rod 8 and flows into the gap S, such a flow passage portion 95 causes the hydrogen that has flowed in to flow out of the cylinder 2. The hydrogen that has flowed out of the cylinder 2 from the other end 95b of the flow passage portion 95 passes through the pipe 95p and is sent to the hydrogen collection unit 95r.

The inert gas supply flow passage portion 96 is formed in the seal unit body 90. The inert gas supply flow passage portion 96 is formed on the other side of the axis O in the radial direction. That is, the inert gas supply flow passage portion 96 is formed on one side of the axis O opposite to the flow passage portion 95. The inert gas supply flow passage portion 96 is provided such that one end 96a thereof communicates with the gap S between the rod 8 and the cylinder 2 at a position between the first seal member 91 and the second seal member 92. In the embodiment of the present disclosure, one end 96a of the inert gas supply flow passage portion 96 is formed below the second seal member 92 at the upper end portion of the insertion tube portion 90a. That is, one end 96a is formed to face the upper end portion of the gap S. The inert gas supply flow passage portion 96 extends radially outward from one end 96a. The other end 96b of the inert gas supply flow passage portion 96 is open to the outside of the cylinder 2. In the embodiment of the present disclosure, the other end 96b of the inert gas supply flow passage portion 96 is open to, for example, the upper surface of the enlarged-diameter portion 90b. One end of a pipe 96p is connected to the other end 96b of the inert gas supply flow passage portion 96. An on-off valve 96v is provided in the pipe 96p. The other end of the pipe 96p is configured to be connectable to an inert gas supply source (not shown) such as a tank filled with an inert gas. The inert gas supplied from the inert gas supply source provided outside the cylinder 2 through the pipe 96p flows through the inert gas supply flow passage portion 96.

In the embodiment of the present disclosure, for example, helium (He) having a specific gravity lower than that of the atmospheric air is used as the inert gas.

In the embodiment of the present disclosure, the seal unit 9A is filled with gaseous helium as the inert gas through the inert gas supply flow passage portion 96 prior to the operation of the liquefied hydrogen pump 101. Specifically, after the installation of the liquefied hydrogen pump 101, the filling with the inert gas is performed at a timing in an initial state in which the liquefied hydrogen pump 101 has not yet been operated, that is, prior to the first operation of the liquefied hydrogen pump 101.

For this purpose, the inert gas supply source is connected to the pipe 96p, and the on-off valves 95v and 96v are opened. Then, the helium is sent from the inert gas supply source to the inert gas supply flow passage portion 96 through the pipe 96p. In a case where the inert gas is supplied from the outside of the cylinder 2 to the inert gas supply flow passage portion 96, the gap S between the rod 8 and the cylinder 2 at a position between the first seal member 91 and the second seal member 92 and the flow passage portion 95 communicating with the gap S are filled with the inert gas.

In a case where the inert gas is supplied from the outside of the cylinder 2 through the inert gas supply flow passage portion 96 in this way, the inert gas flows into the gap S from one end 96a that is open to the upper end portion of the gap S. The atmospheric air present in the inert gas supply flow passage portion 96 and the gap S between the rod 8 and the cylinder 2 at that time is pushed downward with the supply of the inert gas. Since helium having a specific gravity lower than that of the atmospheric air is used as the inert gas, the atmospheric air present in the gap S settles below the helium. Accordingly, the atmospheric air pushed downward flows into the flow passage portion 95 from one end 95a of the flow passage portion 95 that is open to the lower end portion of the gap S, and is pushed to the outside of the liquefied hydrogen pump 101 through the flow passage portion 95. Therefore, the gas present in the seal unit 9A can be efficiently replaced with the inert gas.

Since the filling with the inert gas is performed in the liquefied hydrogen pump 101 in the initial state in which the liquefied hydrogen pump 101 has not yet been operated in this way, atmospheric air containing oxygen is not present in the gap S, the flow passage portion 95, and the inert gas supply flow passage portion 96 even though hydrogen flows into the gap S between the rod 8 and the cylinder 2 after the start of the operation of the liquefied hydrogen pump 101. The hydrogen flows into the inert gas that contains no oxygen. Accordingly, naturally, the hydrogen concentration in the atmospheric air does not reach the lower explosive limit and the liquefied hydrogen pump system 100 can be safely operated.

As shown in FIG. 2, the seal unit 9A further includes an information acquisition unit 200. The information acquisition unit 200 acquires information on the hydrogen concentration in the fluid flowing out of the cylinder 2 through the flow passage portion 95. In the embodiment of the present disclosure, for example, a flowmeter 201 is provided as the information acquisition unit 200. The flowmeter 201 detects the flow rate of the fluid flowing through the flow passage portion 95, that is, the flow rate of the hydrogen leaking from the cylinder body 20 side to the gap S through the gap between the first seal member 91 and the rod 8. As the flow rate of the fluid detected by the flowmeter 201 is higher, the amount of the hydrogen flowing into the gap S from the cylinder body 20 side through the gap between the first seal member 91 and the rod 8 is larger. The flowmeter 201 provided as the information acquisition unit 200 outputs the detected value of the flow rate of the fluid, which flows through the flow passage portion 95, to the control device 60.

Further, the seal unit 9A includes a hydrogen concentration detection unit 202 and an atmospheric air temperature detection unit 203.

The hydrogen concentration detection unit 202 detects the hydrogen concentration in the atmospheric air outside the cylinder 2. In the embodiment of the present disclosure, the hydrogen concentration detection unit 202 is, for example, a water concentration sensor that detects the hydrogen concentration in the atmospheric air inside the atmospheric air flow portion 39.

The atmospheric air temperature detection unit 203 detects an atmospheric air temperature outside the cylinder 2. In the embodiment of the present disclosure, the atmospheric air temperature detection unit 203 is, for example, a thermocouple that detects the atmospheric air temperature inside the atmospheric air flow portion 39.

The hydrogen concentration detection unit 202 and the atmospheric air temperature detection unit 203 output the detected values of the hydrogen concentration and the atmospheric air temperature to the control device 60.

### (Hardware Configuration Diagram)

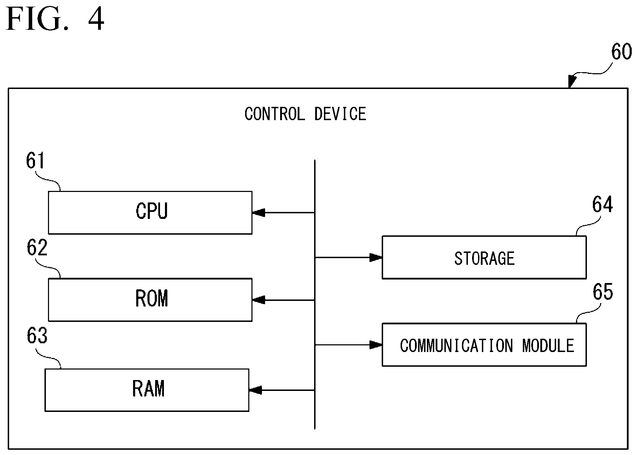

As shown in FIG. 4, the control device 60 is a computer including hardware components such as a CPU 61, a ROM 62, a RAM 63, a storage 64 such as a hard disk drive (HDD), and a communication module 65.

### (Functional Block Diagram)

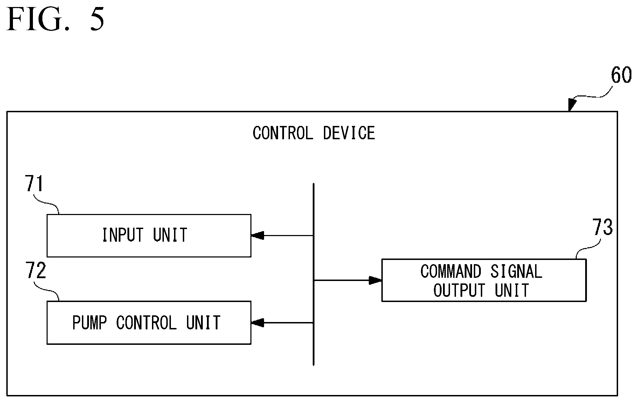

As shown in FIG. 5, the control device 60 functionally includes an input unit 71, a pump control unit 72, and a command signal output unit 73 as the CPU 61 executes a program prestored in the control device 60.

The input unit 71 receives an input signal of each of the detected values output from the information acquisition unit 200, the hydrogen concentration detection unit 202, the atmospheric air temperature detection unit 203, and the like.

The pump control unit 72 generates a command for the electric motor that rotationally drives the eccentric shaft part 31 based on the detected value output from each of the information acquisition unit 200, the hydrogen concentration detection unit 202, and the atmospheric air temperature detection unit 203, in order to control the operation of the liquefied hydrogen pump 101.

The command signal output unit 73 outputs a signal for controlling the operation of the liquefied hydrogen pump 101, based on the command generated by the pump control unit 72.

In a case where it is determined, based on the information on the hydrogen concentration acquired by the information acquisition unit 200, that the hydrogen concentration in the fluid exceeds a preset reference value, the control device 60 stops the operation of the liquefied hydrogen pump 101. In the embodiment of the present disclosure, the flowmeter 201 provided as the information acquisition unit 200 acquires the flow rate of the fluid flowing through the flow passage portion 95 as the information on the hydrogen concentration. In a case where the flow rate of the fluid is equal to or greater than a preset flow rate threshold, the control device 60 determines that the hydrogen concentration in the fluid exceeds the preset reference value and stops the operation of the liquefied hydrogen pump 101.

Further, in a case where the hydrogen concentration in the atmospheric air detected by the hydrogen concentration detection unit 202 is equal to or greater than a preset hydrogen concentration threshold, the control device 60 stops the operation of the liquefied hydrogen pump 101. In the embodiment of the present disclosure, the hydrogen concentration detection unit 202 detects the hydrogen concentration in the atmospheric air inside the atmospheric air flow portion 39. In a case where hydrogen leaks from a gap between the second seal member 92 and the rod 8, the hydrogen concentration in the atmospheric air inside the atmospheric air flow portion 39 increases. In a case where the hydrogen concentration in the atmospheric air detected by the hydrogen concentration detection unit 202 is equal to or greater than the preset hydrogen concentration threshold, the control device 60 determines that hydrogen leaks from the gap between the second seal member 92 and the rod 8 and stops the operation of the liquefied hydrogen pump 101 in the control device 60. Here, it is preferable that the hydrogen concentration threshold is set to, for example, 1 vol%, which is the lower explosive limit of hydrogen.

Furthermore, in a case where the atmospheric air temperature detected by the atmospheric air temperature detection unit 203 is less than a preset atmospheric air temperature threshold, the control device 60 stops the operation of the liquefied hydrogen pump 101. In a case where the atmospheric air temperature is a low temperature at which moisture in the atmospheric air freezes, there is a concern that the second seal member 92 may be damaged by the frozen moisture (ice). With regard to this, in a case where the atmospheric air temperature is less than the preset atmospheric air temperature threshold, the operation of the liquefied hydrogen pump 101 is stopped. The atmospheric air temperature inside the atmospheric air flow portion 39 decreases even in a case where hydrogen leaks from the gap between the second seal member 92 and the rod 8. Here, it is preferable that the atmospheric air temperature threshold is set to, for example, a temperature exceeding 0°C, which is the solidification point (freezing point) of water.

### (Procedure of Processing)

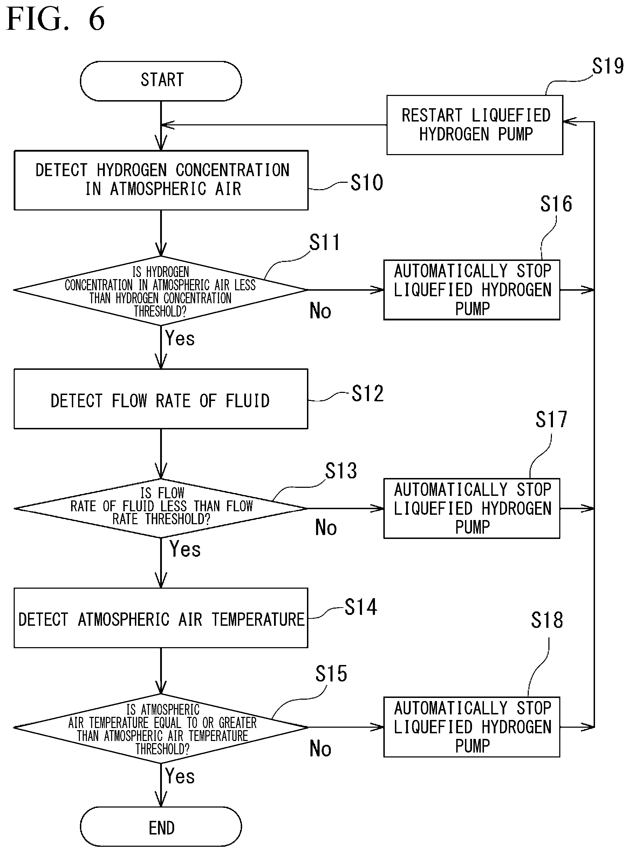

As shown in FIG. 6, a method for controlling the liquefied hydrogen pump system according to an embodiment of the present disclosure includes a hydrogen concentration detection step S10, a hydrogen concentration determination step S11, a flow rate detection step S12, a flow rate determination step S13, an atmospheric air temperature detection step S14, an atmospheric air temperature determination step S15, automatic stop steps S16 to S18, and a restart step S19. These steps S10 to S19 are repeatedly executed at preset time intervals during the operation of the liquefied hydrogen pump 101.

In the hydrogen concentration detection step S10, the hydrogen concentration detection unit 202 detects the hydrogen concentration in the atmospheric air inside the atmospheric air flow portion 39. The detected value of the hydrogen concentration in the atmospheric air detected by the hydrogen concentration detection unit 202 is output to the control device 60.

In the hydrogen concentration determination step S11, the pump control unit 72 determines whether or not the hydrogen concentration in the atmospheric air detected by the hydrogen concentration detection unit 202 is less than the preset hydrogen concentration threshold. As a result, in a case where the hydrogen concentration in the atmospheric air detected by the hydrogen concentration detection unit 202 is less than the preset hydrogen concentration threshold (Yes in Step S11), the method proceeds to Step S12.

On the other hand, in a case where the hydrogen concentration in the atmospheric air detected by the hydrogen concentration detection unit 202 is equal to or greater than the preset hydrogen concentration threshold (No in Step S11), it is determined that hydrogen leaks from the gap between the second seal member 92 and the rod 8 and the method proceeds to the automatic stop step S16.

In the automatic stop step S16, the pump control unit 72 stops the operation of the liquefied hydrogen pump 101. In this case, the operation of the liquefied hydrogen pump 101 may be stopped, and information indicating that the hydrogen concentration is equal to or greater than the hydrogen concentration threshold may be output to an operator by the lighting of a warning lamp, the output of a sound from a warning buzzer, the output of a message, or the like. In a case where the operation of the liquefied hydrogen pump 101 is stopped in the automatic stop step S16, the operator or a worker performs a countermeasure to reduce the hydrogen concentration in the atmospheric air, for example, by increasing the rotational speed of a fan or a blower that causes the atmospheric air to flow through the atmospheric air flow portion 39, by ventilating the installation location of the liquefied hydrogen pump 101, or the like. After the countermeasure is completely performed, the operator or the worker performs a predetermined operation for restarting the liquefied hydrogen pump 101. In a case where the predetermined operation for restarting the liquefied hydrogen pump 101 is input, the control device 60 restarts the liquefied hydrogen pump 101 (step S19).

In the flow rate detection step S12, the flow rate of the fluid (hydrogen) flowing through the flow passage portion 95 is detected by the flowmeter 201 provided as the information acquisition unit 200. The detected value of the flow rate of the fluid detected by the information acquisition unit 200 is output to the control device 60.

In the flow rate determination step S13, the pump control unit 72 determines whether or not the flow rate of the fluid detected by the flowmeter 201 is less than the preset flow rate threshold.

As a result, in a case where the flow rate of the fluid flowing through the flow passage portion 95, which is detected by the flowmeter 201, is less than the preset flow rate threshold (Yes in Step S13), the method proceeds to Step S14.

On the other hand, in a case where the flow rate of the fluid flowing through the flow passage portion 95, which is detected by the flowmeter 201, is equal to or greater than the preset flow rate threshold (No in Step S13), it is determined that hydrogen leaks from the gap between the first seal member 91 and the rod 8 and the method proceeds to the automatic stop step S17.

In the automatic stop step S17, the pump control unit 72 stops the operation of the liquefied hydrogen pump 101. In this case, as in the automatic stop step S16, the operation of the liquefied hydrogen pump 101 may be stopped and information indicating that the flow rate in the flow passage portion 95 is equal to or greater than the flow rate threshold may be output. In a case where the operation of the liquefied hydrogen pump 101 is stopped in the automatic stop step S17, the operator or the worker performs a countermeasure to reduce the flow rate of the fluid in the flow passage portion 95, for example, by replacing the first seal member 91, or the like. After the countermeasure is completely performed, the operator or the worker performs a predetermined operation for restarting the liquefied hydrogen pump 101. In a case where the predetermined operation for restarting the liquefied hydrogen pump 101 is input, the control device 60 restarts the liquefied hydrogen pump 101 (step S19).

In the atmospheric air temperature detection step S14, the atmospheric air temperature detection unit 203 detects the temperature of the atmospheric air inside the atmospheric air flow portion 39. The detected value of the temperature of the atmospheric air detected by the atmospheric air temperature detection unit 203 is output to the control device 60.

In the atmospheric air temperature determination step S15, the pump control unit 72 determines whether or not the atmospheric air temperature detected by the atmospheric air temperature detection unit 203 is equal to or greater than the preset atmospheric air temperature threshold.

As a result, in a case where the atmospheric air temperature detected by the atmospheric air temperature detection unit 203 is equal to or greater than the preset atmospheric air temperature threshold (Yes in Step S15), a series of processing ends.

On the other hand, in a case where the atmospheric air temperature detected by the atmospheric air temperature detection unit 203 is less than the preset atmospheric air temperature threshold (No in Step S15), it is determined that there is a concern that moisture in the atmospheric air freezes in the atmospheric air flow portion 39 and the method proceeds to the automatic stop step S18.

In the automatic stop step S18, the pump control unit 72 stops the operation of the liquefied hydrogen pump 101. In this case, as in the automatic stop steps S16 and S17, the operation of the liquefied hydrogen pump 101 may be stopped and information indicating that the atmospheric air temperature is less than the atmospheric air temperature threshold may be output. In a case where the operation of the liquefied hydrogen pump 101 is stopped in the automatic stop step S18, the operator or the worker performs a countermeasure such as heating the periphery of the second seal member 92 to increase the atmospheric air temperature to a temperature equal to or greater than the atmospheric air temperature threshold. After the countermeasure is completely performed, the operator or the worker performs a predetermined operation for restarting the liquefied hydrogen pump 101. In a case where the predetermined operation for restarting the liquefied hydrogen pump 101 is input, the control device 60 restarts the liquefied hydrogen pump 101 (step S19).

### (Functions and Effects)

In the liquefied hydrogen pump system 100 having the above-described configuration, the piston 1 is caused to reciprocate in the cylinder 2 in the direction of the axis O via the rod 8 by the drive unit 3, so that the liquefied hydrogen introduced into the cylinder 2 from the outside is compressed and discharged to the outside of the cylinder 2. In a case where a part of the liquefied hydrogen present in the cylinder 2 passes through the gap S between the first seal member 91 and the outer peripheral surface of the rod 8, the liquefied hydrogen or low-temperature hydrogen gas generated through the vaporization of the liquefied hydrogen flows into the gap S between the rod 8 and the cylinder 2 at a position between the first seal member 91 and the second seal member 92. The hydrogen (the liquefied hydrogen or the hydrogen gas) that has flowed into the gap S between the rod 8 and the cylinder 2 flows through the flow passage portion 95 as a fluid and is discharged to the outside of the cylinder 2.

The information acquisition unit 200 acquires information on the hydrogen concentration in the fluid that flows to the outside of the cylinder 2 through the flow passage portion 95. In a case where the hydrogen flows through the flow passage portion 95, the information on the hydrogen concentration acquired by the information acquisition unit 200 changes. In a case where it is determined, based on the information on the hydrogen concentration acquired by the information acquisition unit 200, that the hydrogen concentration in the fluid exceeds the preset reference value, the control device 60 stops the operation of the liquefied hydrogen pump 101. In a case where liquefied hydrogen leaks, the operation of the liquefied hydrogen pump 101 is stopped through the detection of a change in the hydrogen concentration in this way, so that the hydrogen concentration in the surrounding atmospheric air can be suppressed to a value equal to or smaller than the predetermined reference value.

Further, the information acquisition unit 200 acquires the flow rate of the fluid as the information on the hydrogen concentration. In a case where a part of the liquefied hydrogen present in the cylinder 2 passes through the gap S between the first seal member 91 and the outer peripheral surface of the rod 8, the hydrogen that has flowed into the gap S between the rod 8 and the cylinder 2 flows through the flow passage portion 95 as the fluid. Therefore, as the flow rate of the fluid flowing through the flow passage portion 95 increases, the amount of leaked hydrogen increases. In a case where the flow rate of the fluid present in the flow passage portion 95 is acquired as the information on the hydrogen concentration in this way and the flow rate of the fluid is equal to or greater than the preset flow rate threshold, the control device 60 can determine that the hydrogen concentration in the fluid exceeds the preset reference value and stop the operation of the liquefied hydrogen pump 101. As a result, the hydrogen concentration in the surrounding atmospheric air can be suppressed to a value equal to or smaller than the predetermined reference value.

Furthermore, in a case where the atmospheric air temperature is less than the preset atmospheric air temperature threshold, the operation of the liquefied hydrogen pump 101 is stopped in the liquefied hydrogen pump system 100. Accordingly, since the liquefied hydrogen pump 101 is made not to operate under a temperature environment in which moisture in the atmospheric air freezes, damage to the second seal member 92 can be suppressed. As a result, the leakage of hydrogen from a gap between the damaged second seal member 92 and the rod 8 can be suppressed.

In addition, in a case where the hydrogen concentration in the atmospheric air detected by the hydrogen concentration detection unit 202 is equal to or greater than the preset hydrogen concentration threshold, the operation of the liquefied hydrogen pump 101 is stopped in the liquefied hydrogen pump system 100. Accordingly, an increase in the hydrogen concentration in the atmospheric air, which is caused by the hydrogen leaking from the liquefied hydrogen pump 101, can be suppressed.

Further, in the liquefied hydrogen pump system 100, the inert gas is supplied from the outside of the cylinder 2 through the inert gas supply flow passage portion 96. Accordingly, the gap S between the rod 8 and the cylinder 2 at a position between the first seal member 91 and the second seal member 92 and the flow passage portion 95 communicating with the gap S can be filled with the inert gas. Since the liquefied hydrogen pump 101 in the initial state in which the first operation has not yet been performed is filled with the inert gas, the hydrogen flows into the inert gas containing no oxygen even in a case where the hydrogen flows into the gap S between the rod 8 and the cylinder 2 after the start of the operation of the liquefied hydrogen pump 101. Accordingly, the hydrogen concentration in the atmospheric air does not reach the lower explosive limit and the liquefied hydrogen pump system can be safely operated.

Furthermore, in the liquefied hydrogen pump system 100, one end 96a of the inert gas supply flow passage portion 96 communicates with the gap S between the rod 8 and the cylinder 2 at a position above one end 95a of the flow passage portion 95. Accordingly, in a case where helium, which is an inert gas having a specific gravity lower than that of the atmospheric air, is supplied from the outside of the cylinder 2 through the inert gas supply flow passage portion 96, the atmospheric air present in the inert gas supply flow passage portion 96 and the gap S between the rod 8 and the cylinder 2 at that time is pushed downward with the supply of the inert gas. Therefore, the pushed atmospheric air is pushed to the outside of the liquefied hydrogen pump 101 from the gap S between the rod 8 and the cylinder 2 through the flow passage portion 95. Accordingly, the gas present in the liquefied hydrogen pump 101 can be efficiently replaced with the inert gas.

In addition, in the liquefied hydrogen pump system 100, the interval D between the first seal member 91 and the second seal member 92 in the direction of the axis O is larger than the moving stroke of the rod 8 in the direction of the axis O.

Accordingly, in a case where the rod 8 is moved in the direction of the axis O, it is possible to inhibit foreign matter and the like, which are generated due to the sliding between the second seal member 92 and the rod 8, from reaching a sliding portion between the first seal member 91 and the rod 8. Therefore, it is possible to suppress damage to the first seal member 91 that is caused by the foreign matter and the like generated due to the sliding between the second seal member 92 and the rod 8. Further, it is possible to inhibit the foreign matter and the like, which are generated due to the sliding between the first seal member 91 and the rod 8, from reaching a sliding portion between the second seal member 92 and the rod 8. Therefore, it is possible to suppress damage to the second seal member 92 that is caused by the foreign matter and the like generated due to the sliding between the first seal member 91 and the rod 8.

In the method for controlling the liquefied hydrogen pump system 100 having the above-described configuration, the information on the hydrogen concentration in the fluid flowing out of the cylinder 2 is acquired, and the operation of the liquefied hydrogen pump 101 is stopped in a case where it is determined, based on the acquired information on the hydrogen concentration, that the hydrogen concentration in the fluid exceeds the preset reference value. In a case where the liquefied hydrogen leaks, the operation of the liquefied hydrogen pump 101 is stopped through the detection of a change in the hydrogen concentration in this way, so that the hydrogen concentration in the surrounding atmospheric air can be suppressed to a value equal to or smaller than the predetermined reference value.

### (Second Embodiment)

Next, a liquefied hydrogen pump system and a method for controlling the liquefied hydrogen pump system according to a second embodiment of the present disclosure will be described. In the second embodiment to be described below, components common to the first embodiment will be denoted in the drawings by the same reference numerals and the description thereof will be omitted. The second embodiment is different from the first embodiment in that a thermometer 205 for fluid is provided instead of the flowmeter 201.

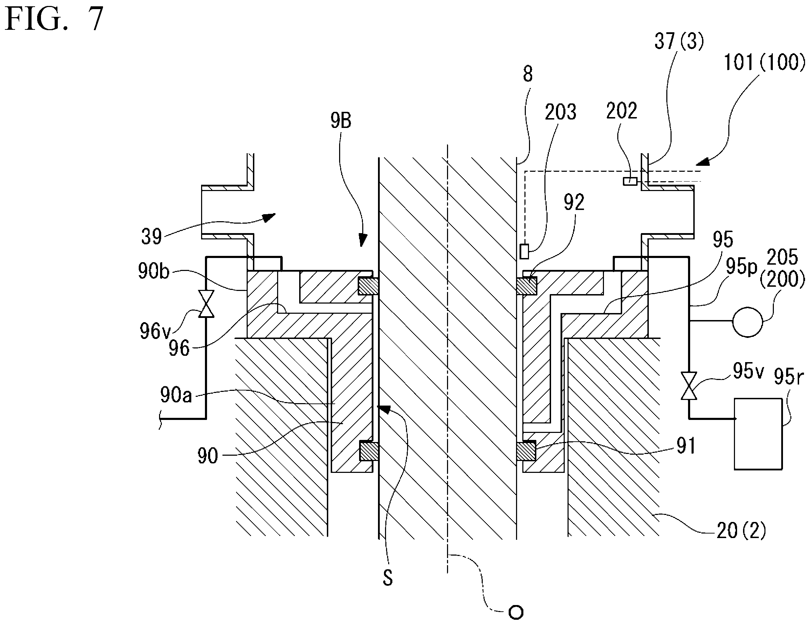

As shown in FIG. 7, in a liquefied hydrogen pump 101 of the liquefied hydrogen pump system 100 according to the present embodiment, a seal unit 9B includes, for example, a thermometer 205 as the information acquisition unit 200. The thermometer 205 is, for example, a thermocouple that detects the temperature of the fluid flowing through the flow passage portion 95, that is, the temperature of the hydrogen leaking from the cylinder body 20 side to the gap S through the gap between the first seal member 91 and the rod 8. The thermometer 205 provided as the information acquisition unit 200 outputs the detected value of the temperature of the fluid, which flows through the flow passage portion 95, to the control device 60.

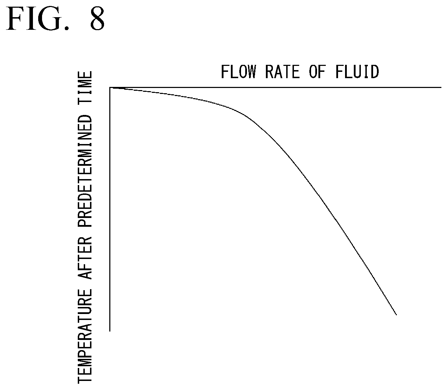

As shown in FIG. 8, it can be estimated that the flow rate of the hydrogen (fluid), which leaks from the cylinder body 20 side through the gap between the first seal member 91 and the rod 8 and flows into the gap S, is higher as the temperature of the fluid detected by the thermometer 205 at a point in time when a predetermined time has elapsed is lower.

It is preferable that the thermocouple, which is the thermometer 205, is provided in the flow passage portion 95 at a position as close as possible to the first seal member 91 positioned on the lower side. Accordingly, a decrease in temperature due to the influence of the hydrogen that has passed through the gap between the first seal member 91 and the rod 8 can be detected with better responsiveness.

### (Procedure of Processing)

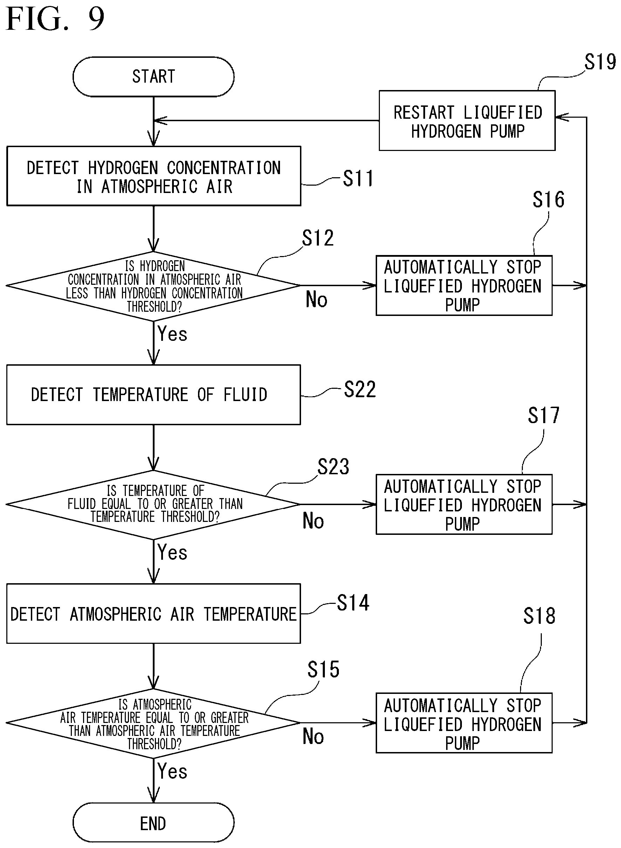

As shown in FIG. 9, the method for controlling the liquefied hydrogen pump system according to the embodiment of the present disclosure includes a hydrogen concentration detection step S10, a hydrogen concentration determination step S11, a temperature detection step S22, a temperature determination step S23, an atmospheric air temperature detection step S14, an atmospheric air temperature determination step S15, automatic stop steps S16 to S18, and a restart step S19.

In the hydrogen concentration detection step S10, the hydrogen concentration detection unit 202 detects the hydrogen concentration in the atmospheric air inside the atmospheric air flow portion 39.

In the hydrogen concentration determination step S11, the pump control unit 72 determines whether or not the hydrogen concentration in the atmospheric air detected by the hydrogen concentration detection unit 202 is less than the preset hydrogen concentration threshold. As a result, in a case where the hydrogen concentration in the atmospheric air detected by the hydrogen concentration detection unit 202 is less than the preset hydrogen concentration threshold (Yes in Step S11), the method proceeds to Step S22.

On the other hand, in a case where the hydrogen concentration in the atmospheric air detected by the hydrogen concentration detection unit 202 is equal to or greater than the preset hydrogen concentration threshold (No in Step S11), it is determined that the hydrogen leaks from a gap between the second seal member 92 and the rod 8 and the method sequentially proceeds to the automatic stop step S16 and the restart step S19 as in the first embodiment.

In the temperature detection step S22, the temperature of the fluid (hydrogen) flowing through the flow passage portion 95 is detected by the thermometer 205 provided as the information acquisition unit 200. The detected value of the temperature of the fluid detected by the information acquisition unit 200 is output to the control device 60.

In the temperature determination step S23, the pump control unit 72 determines whether or not the temperature of the fluid detected by the thermometer 205 is equal to or greater than a preset temperature threshold.

As a result, in a case where the temperature flowing through the flow passage portion 95 detected by the thermometer 205 is equal to or greater than the preset temperature threshold (Yes in Step S23), the method proceeds to Step S14.

On the other hand, in a case where the temperature flowing through the flow passage portion 95 detected by the thermometer 205 is less than the preset temperature threshold (No in Step S23), it is determined that the hydrogen leaks from a gap between the first seal member 91 and the rod 8 and the method proceeds to the automatic stop step S17.

In the automatic stop step S17, the operation of the liquefied hydrogen pump 101 is stopped. In this case, the operation of the liquefied hydrogen pump 101 may be stopped, and information indicating that the temperature in the flow passage portion 95 is equal to or greater than the temperature threshold may be output. In a case where the operation of the liquefied hydrogen pump 101 is stopped in the automatic stop step S17, an operator or a worker performs a countermeasure to suppress a decrease in the temperature of the fluid inside the flow passage portion 95, for example, by replacing the first seal member 91. After the countermeasure is completely performed, the operator or the worker performs a predetermined operation for restarting the liquefied hydrogen pump 101. In a case where the predetermined operation for restarting the liquefied hydrogen pump 101 is input, the control device 60 restarts the liquefied hydrogen pump 101 (step S19).

In the atmospheric air temperature detection step S14, the atmospheric air temperature detection unit 203 detects the temperature of the atmospheric air inside the atmospheric air flow portion 39.

In the atmospheric air temperature determination step S15, the pump control unit 72 determines whether or not the atmospheric air temperature detected by the atmospheric air temperature detection unit 203 is equal to or greater than the preset atmospheric air temperature threshold.

As a result, in a case where the atmospheric air temperature detected by the atmospheric air temperature detection unit 203 is equal to or greater than the preset atmospheric air temperature threshold (Yes in Step S15), a series of processing ends.

On the other hand, in a case where the atmospheric air temperature detected by the atmospheric air temperature detection unit 203 is less than the preset atmospheric air temperature threshold (No in Step S15), it is determined that there is a concern that moisture in the atmospheric air freezes in the atmospheric air flow portion 39 and the method sequentially proceeds to the automatic stop step S18 and the restart step S19.

### (Functions and Effects)

In the liquefied hydrogen pump system 100 having the above-described configuration, the temperature of the fluid in the flow passage portion 95 is acquired as the information on the hydrogen concentration. In a case where the acquired temperature of the fluid is less than the preset temperature threshold, the control device 60 determines that the hydrogen concentration in the fluid exceeds a preset reference value and can stop the operation of the liquefied hydrogen pump 101. As a result, the hydrogen concentration in the surrounding atmospheric air can be suppressed to a value equal to or smaller than the predetermined reference value.

### (Third Embodiment)

Next, a liquefied hydrogen pump system and a method for controlling the liquefied hydrogen pump system according to a third embodiment of the present disclosure will be described. In the third embodiment to be described below, components common to the first embodiment will be denoted in the drawings by the same reference numerals and the description thereof will be omitted. The third embodiment is different from the first embodiment in that a heater 98 is provided. In the third embodiment, the heater 98 is provided in addition to the configuration shown in the first embodiment.

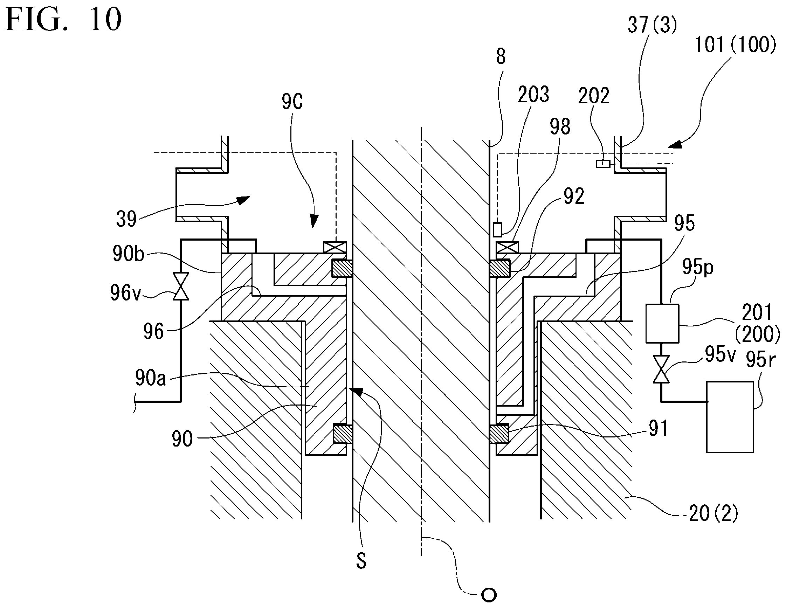

As shown in FIG. 10, in a liquefied hydrogen pump 101 of the liquefied hydrogen pump system 100 according to the present embodiment, a seal unit 9C further includes a heater 98 that heats a second seal member 92. For example, the heater 98 is provided on the upper surface of an enlarged-diameter portion 90b of a seal unit body 90 at a position overlapping the second seal member 92 as viewed from above. The heater 98 may be provided over the entire upper surface of the enlarged-diameter portion 90b. Further, the heater 98 may be embedded in the enlarged-diameter portion 90b.

In the present embodiment, the control device 60 causes the heater 98 to heat the second seal member 92 in a case where the atmospheric air temperature detected by the atmospheric air temperature detection unit 203 is less than a preset temperature threshold.

### (Procedure of Processing)

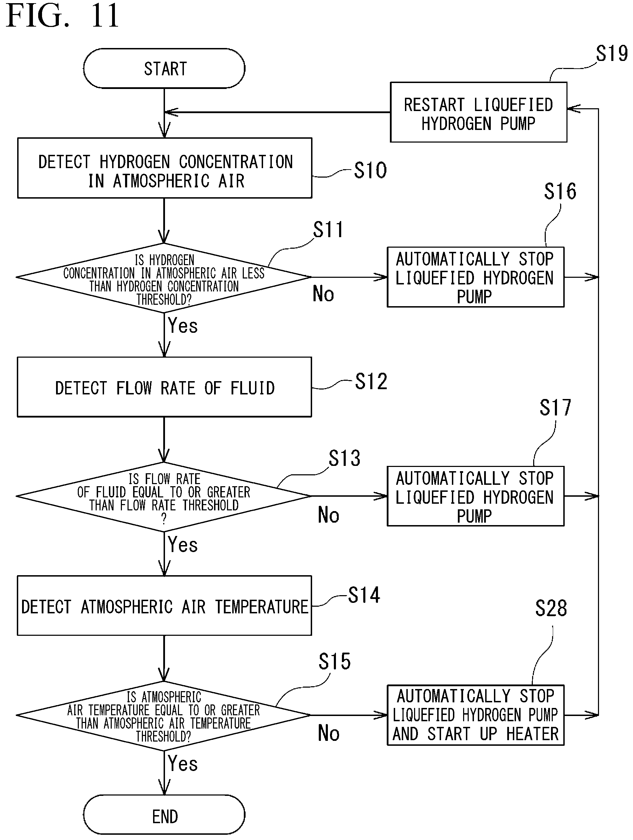

As shown in FIG. 11, the method for controlling the liquefied hydrogen pump system according to the embodiment of the present disclosure includes a hydrogen concentration detection step S10, a hydrogen concentration determination step S11, a flow rate detection step S12, a flow rate determination step S13, an atmospheric air temperature detection step S14, an atmospheric air temperature determination step S15, automatic stop steps S16 and S17, a heater startup step S28, and a restart step S19.

In the present embodiment, the heater startup step S28 is executed in a case where the atmospheric air temperature detected by the atmospheric air temperature detection unit 203 is less than an atmospheric air temperature threshold in the atmospheric air temperature determination step S15 (No in Step S15). In the heater startup step S28, the pump control unit 72 stops the operation of the liquefied hydrogen pump 101 and starts up the heater 98. Accordingly, the temperature of the second seal member 92, the temperature in the vicinity of the second seal member 92, and the temperature inside the atmospheric air flow portion 39 are increased, so that the freezing of moisture in the atmospheric air inside the atmospheric air flow portion 39 is suppressed. After the atmospheric air temperature is increased to a temperature equal to or greater than the atmospheric air temperature threshold by the heater startup step S28, an operator or a worker performs a predetermined operation for restarting the liquefied hydrogen pump 101. The control device 60 restarts the liquefied hydrogen pump 101 (Step S19).

### (Functions and Effects)

In the liquefied hydrogen pump system 100 having the above-described configuration, as in the first embodiment, the operation of the liquefied hydrogen pump 101 is stopped in a case where the atmospheric air temperature is less than the preset atmospheric air temperature threshold. Accordingly, since the liquefied hydrogen pump 101 is made not to operate under a temperature environment in which moisture in the atmospheric air freezes, damage to the second seal member 92 can be suppressed. As a result, the leakage of hydrogen from a gap between the damaged second seal member 92 and the rod 8 can be suppressed.

The seal unit 9C further includes the heater 98 that heats the second seal member 92, and the control device 60 causes the heater 98 to heat the second seal member 92 and the vicinity thereof in a case where the atmospheric air temperature detected by the atmospheric air temperature detection unit 203 is less than the preset temperature threshold.

Accordingly, since the heating is performed by the heater 98 in a case where the atmospheric air temperature is less than the preset atmospheric air temperature threshold, the freezing of moisture in the atmospheric air is suppressed. As a result, since damage to the second seal member 92 caused by the frozen moisture can be suppressed, the leakage of hydrogen from the gap between the second seal member 92 and the rod 8 can be suppressed.

Further, as in the first embodiment, the operation of the liquefied hydrogen pump 101 is stopped in a case where it is determined that the hydrogen concentration in the fluid exceeds a preset reference value based on the information on the hydrogen concentration acquired by the information acquisition unit 200. In a case where the liquefied hydrogen leaks, the operation of the liquefied hydrogen pump 101 is stopped through the detection of a change in the hydrogen concentration in this way, so that the hydrogen concentration in the surrounding atmospheric air can be suppressed to a value equal to or smaller than the predetermined reference value.

### (First Modification Example of Embodiment)

Although the embodiments of the present disclosure have been described in detail above with reference to the drawings, the specific configuration is not limited to the embodiments and the present disclosure also includes design changes and the like without departing from the scope of the present disclosure.

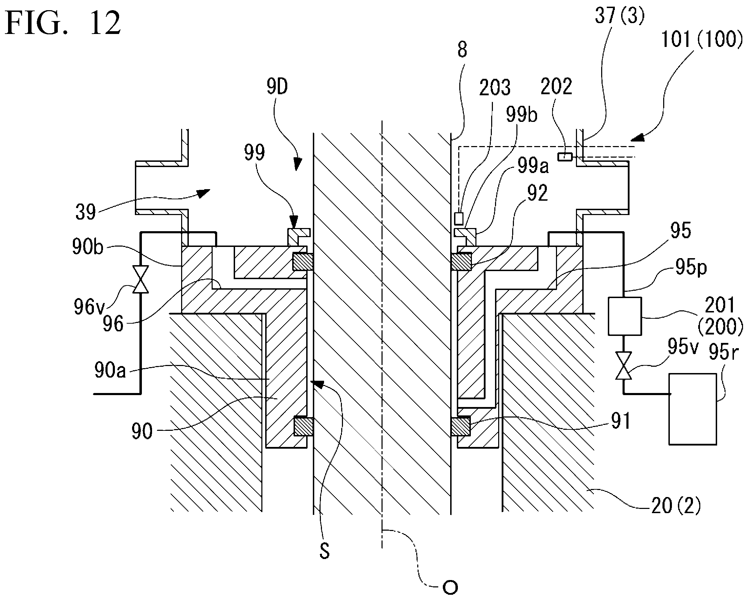

For example, as shown in FIG. 12, a seal unit 9D of the liquefied hydrogen pump system 100 may include a dust seal 99 in the atmospheric air flow portion 39.

The dust seal 99 is provided on the enlarged-diameter portion 90b of the seal unit body 90. The dust seal 99 integrally includes a fixed portion 99a that is fixed to the enlarged-diameter portion 90b and a protruding portion 99b that extends radially inward from an upper end of the fixed portion 99a. The protruding portion 99b is formed to overlap the second seal member 92 as viewed from above. Accordingly, it is possible to inhibit foreign matter and the like, which are introduced into the atmospheric air flow portion 39, from reaching the second seal member 92.

Further, it is preferable that the protruding portion 99b is provided to be spaced apart radially outward from the outer peripheral surface of the rod 8. Accordingly, it is possible to inhibit the hydrogen, which has flowed out of the gap between the second seal member 92 and the rod 8, from staying between the rod 8 and the dust seal 99. In order to inhibit the hydrogen from staying, the dust seal 99 may be made of a mesh-like material, a porous material, or the like. In this case, it is preferable to use a mesh-like material or a porous material having an opening dimension to prevent the intrusion of foreign matter while allowing the passage of hydrogen.

According to such a configuration, the dust seal 99 provided in the atmospheric air flow portion 39 can inhibit the foreign matter and the like, which are present in the atmospheric air flowing through the atmospheric air flow portion 39, from entering the gap S between the rod 8 and the second seal member 92.

### (Second Modification Example of Embodiment)

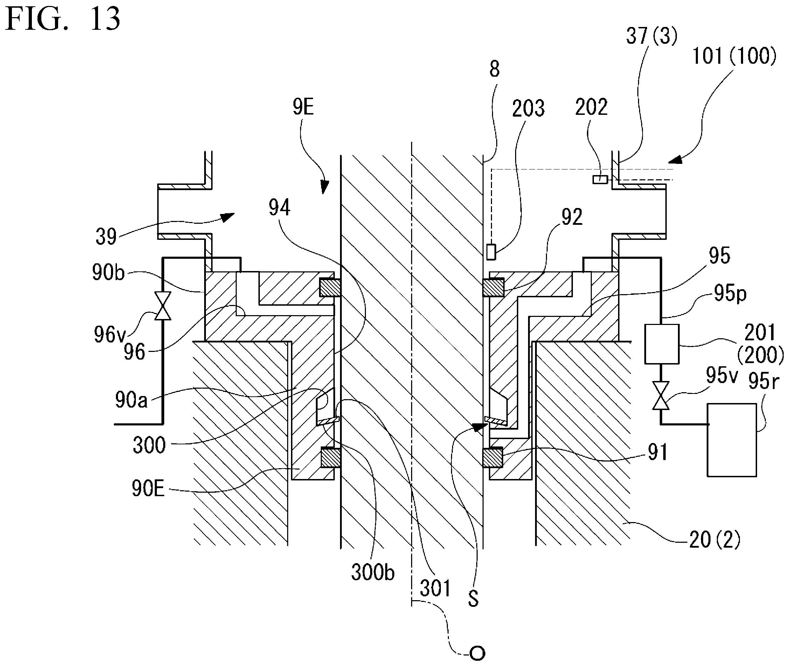

Further, as shown in FIG. 13, a seal unit 9E of the liquefied hydrogen pump system 100 may include a recessed portion 300 in a seal unit body 90E.

The recessed portion 300 is formed in an insertion tube portion 90a of the seal unit body 90E. The recessed portion 300 is formed in the insertion tube portion 90a of the seal unit body 90E constituting the cylinder 2 at a position between the first seal member 91 and the second seal member 92. The recessed portion 300 is formed at a lower portion of an inner wall surface 94 of the insertion tube portion 90a that is formed to be spaced apart from the outer peripheral surface of the rod 8 toward the radially outer side of the rod 8. The recessed portion 300 is formed to be recessed radially outward from the inner wall surface 94. The recessed portion 300 is continuously formed in the circumferential direction around the axis O. A bottom surface 300b of the recessed portion 300 is inclined obliquely downward from a radially inner side toward a radially outer side. The bottom surface 300b is provided with a guide portion 301 that protrudes radially inward from the inner wall surface 94. The guide portion 301 extends to be inclined obliquely upward from the radially outer side toward the radially inner side.

Since the recessed portion 300 is provided at a lower position in the inner wall surface 94 in this way, the wear powder and the like of the second seal member 92 generated due to the sliding between the second seal member 92 and the rod 8 can be collected into the recessed portion 300. In particular, since the recessed portion 300 is provided with the guide portion 301, the wear powder falling from the second seal member 92 can be efficiently guided and collected into the recessed portion 300.

Accordingly, in a case where the rod 8 is moved in the direction of the axis O, it is possible to inhibit the foreign matter and the like, which are generated due to the sliding between the second seal member 92 and the rod 8, from reaching a sliding portion between the first seal member 91 provided below and the rod 8. Therefore, it is possible to suppress damage to the first seal member 91 that is caused by the foreign matter and the like generated due to the sliding between the second seal member 92 and the rod 8.

### (Other Embodiments)

In addition to this, the components shown in each of the above-described embodiments and modification examples thereof may be provided in combination as appropriate.

Further, the order thereof and the thresholds used for various determinations may be changed as appropriate in the procedure of the method for controlling the liquefied hydrogen pump system shown in each of the above-described embodiments.

### <Supplementary Note>

The liquefied hydrogen pump system 100 and the method for controlling the liquefied hydrogen pump system 100 according to each embodiment are understood as follows, for example.
(1) A liquefied hydrogen pump system 100 according to a first aspect is a liquefied hydrogen pump system 100 including a liquefied hydrogen pump 101 configured to compress liquefied hydrogen and a control device 60 configured to control an operation of the liquefied hydrogen pump 101, in which the liquefied hydrogen pump 101 includes a tubular cylinder 2 extending in a direction of an axis O, a piston 1 provided in the cylinder 2 to be reciprocable in the direction of the axis O, configured to compress the liquefied hydrogen introduced into the cylinder 2 from an outside, and configured to discharge the liquefied hydrogen to an outside of the cylinder 2, a rod 8 of which one end is connected to the piston 1 in the cylinder 2 and the other end protrudes to the outside of the cylinder 2, a drive unit 3 connected to the other end of the rod 8 and configured to cause the piston 1 to reciprocate in the direction of the axis O in the cylinder 2 via the rod 8, and any one of seal units 9A to 9E that seals a gap S between the rod 8 and the cylinder 2; any one of the seal units 9A to 9E includes a first seal member 91 configured to seal the gap S between the rod 8 and the cylinder 2, a second seal member 92 provided to be spaced apart from the first seal member 91 in a direction away from the piston 1 in the direction of the axis O and configured to seal the gap between the rod 8 and the cylinder 2, a flow passage portion 95 which is formed in the cylinder 2 and of which one end communicates with the gap S between the rod 8 and the cylinder 2 at a position between the first seal member 91 and the second seal member 92 and the other end is open to the outside of the cylinder 2, and an information acquisition unit 200 configured to acquire information on a hydrogen concentration in a fluid flowing out of the cylinder 2 through the flow passage portion 95; and the control device 60 stops an operation of the liquefied hydrogen pump 101 in a case where it is determined, based on the information on the hydrogen concentration acquired by the information acquisition unit 200, that the hydrogen concentration in the fluid exceeds a preset reference value.

In the liquefied hydrogen pump system 100, the piston 1 is caused to reciprocate in the cylinder 2 in the direction of the axis O via the rod 8 by the drive unit 3, so that the liquefied hydrogen introduced into the cylinder 2 from the outside is compressed and discharged to the outside of the cylinder 2. In a case where a part of the liquefied hydrogen present in the cylinder 2 passes through the gap S between the first seal member 91 and the outer peripheral surface of the rod 8 and leaks, the liquefied hydrogen or hydrogen gas generated through the vaporization of the liquefied hydrogen flows into the gap S between the rod 8 and the cylinder 2 at a position between the first seal member 91 and the second seal member 92. The hydrogen that has flowed into the gap S between the rod 8 and the cylinder 2 flows through the flow passage portion 95 as a fluid and is discharged to the outside of the cylinder 2.

The information acquisition unit 200 acquires information on the hydrogen concentration in the fluid that flows to the outside of the cylinder 2 through the flow passage portion 95. In a case where the hydrogen flows through the flow passage portion 95, the information on the hydrogen concentration acquired by the information acquisition unit 200 changes. In a case where it is determined, based on the information on the hydrogen concentration acquired by the information acquisition unit 200, that the hydrogen concentration in the fluid exceeds the preset reference value, the control device 60 stops the operation of the liquefied hydrogen pump 101. In a case where the liquefied hydrogen leaks, the operation of the liquefied hydrogen pump 101 is stopped through the detection of a change in the hydrogen concentration in this way, so that the hydrogen concentration in the surrounding atmospheric air can be suppressed to a value equal to or smaller than the predetermined reference value.

(2) A liquefied hydrogen pump system 100 according to a second aspect is the liquefied hydrogen pump system 100 of (1) in which the information acquisition unit 200 acquires a flow rate of the fluid as the information on the hydrogen concentration, and the control device 60 stops the operation of the liquefied hydrogen pump 101 in a case where the flow rate of the fluid is equal to or greater than a preset flow rate threshold.

Accordingly, in a case where a part of the liquefied hydrogen present in the cylinder 2 passes through the gap S between the first seal member 91 and the outer peripheral surface of the rod 8, the hydrogen (the liquefied hydrogen or the hydrogen gas) that has flowed into the gap S between the rod 8 and the cylinder 2 flows through the flow passage portion 95 as the fluid. Therefore, as the flow rate of the fluid flowing through the flow passage portion 95 increases, the amount of leaked hydrogen increases. In a case where the flow rate of the fluid present in the flow passage portion 95 is acquired as the information on the hydrogen concentration in this way and the flow rate of the fluid is equal to or greater than the preset flow rate threshold, the control device 60 can determine that the hydrogen concentration in the fluid exceeds the preset reference value and stop the operation of the liquefied hydrogen pump 101. As a result, the hydrogen concentration in the surrounding atmospheric air can be suppressed to a value equal to or smaller than the predetermined reference value.

(3) A liquefied hydrogen pump system 100 according to a third aspect is the liquefied hydrogen pump system 100 of (1) or (2) in which the information acquisition unit 200 acquires a temperature of the fluid as the information on the hydrogen concentration and the control device 60 stops the operation of the liquefied hydrogen pump 101 in a case where the temperature of the fluid is less than a preset temperature threshold.

Accordingly, in a case where a part of the liquefied hydrogen present in the cylinder 2 passes through the gap S between the first seal member 91 and the outer peripheral surface of the rod 8, the hydrogen that has flowed into the gap S between the rod 8 and the cylinder 2 flows through the flow passage portion 95 as the fluid. As the flow rate of the hydrogen flowing through the flow passage portion 95 increases, the temperature of the fluid decreases. For this reason, in a case where the temperature of the fluid present in the flow passage portion 95 is acquired as the information on the hydrogen concentration and the temperature of the fluid is less than the preset temperature threshold, the control device 60 can determine that the hydrogen concentration in the fluid exceeds the preset reference value and stop the operation of the liquefied hydrogen pump 101. As a result, the hydrogen concentration in the surrounding atmospheric air can be suppressed to a value equal to or smaller than the predetermined reference value.

(4) A liquefied hydrogen pump system 100 according to a fourth aspect is the liquefied hydrogen pump system 100 of any one of (1) to (3) in which any one of the seal units 9A to 9E further includes an atmospheric air temperature detection unit 203 configured to detect an atmospheric air temperature outside the cylinder 2 and the control device 60 stops the operation of the liquefied hydrogen pump 101 in a case where the atmospheric air temperature detected by the atmospheric air temperature detection unit 203 is less than a preset atmospheric air temperature threshold.

In a case where the atmospheric air temperature is a low temperature at which moisture in the atmospheric air freezes, there is a concern that the second seal member 92 may be damaged by the frozen moisture (ice). With regard to this, in a case where the atmospheric air temperature is less than the preset atmospheric air temperature threshold, the operation of the liquefied hydrogen pump 101 is stopped. Accordingly, since the liquefied hydrogen pump 101 is made not to operate under a temperature environment in which moisture in the atmospheric air freezes, damage to the second seal member 92 can be suppressed. As a result, the leakage of hydrogen from a gap between the damaged second seal member 92 and the rod 8 can be suppressed.

(5) A liquefied hydrogen pump system 100 according to a fifth aspect is the liquefied hydrogen pump system 100 of (4) in which the seal unit 9C further includes a heater 98 configured to heat the second seal member 92, and the control device 60 causes the heater 98 to heat the second seal member 92 in a case where the atmospheric air temperature detected by the atmospheric air temperature detection unit 203 is less than the preset temperature threshold.

Accordingly, since the second seal member 92 is heated by the heater 98 in a case where the atmospheric air temperature is less than the preset atmospheric air temperature threshold, the temperature of the second seal member 92 and the temperature in the vicinity thereof can be increased. Therefore, the freezing of moisture in the atmospheric air is suppressed even under a temperature environment in which the moisture in the atmospheric air freezes. As a result, since damage to the second seal member 92 caused by the frozen moisture can be suppressed, the leakage of hydrogen from the gap between the second seal member 92 and the rod 8 can be suppressed.

(6) A liquefied hydrogen pump system 100 according to a sixth aspect is the liquefied hydrogen pump system 100 of any one of (1) to (5) in which any one of the seal units 9A to 9E further includes a hydrogen concentration detection unit 202 configured to detect a hydrogen concentration in atmospheric air outside the cylinder 2 and the control device 60 stops the operation of the liquefied hydrogen pump 101 in a case where the hydrogen concentration in the atmospheric air detected by the hydrogen concentration detection unit 202 is equal to or greater than a preset hydrogen concentration threshold.

Accordingly, since the operation of the liquefied hydrogen pump 101 is stopped in a case where the hydrogen concentration in the atmospheric air is equal to or greater than the preset hydrogen concentration threshold, a further increase in the hydrogen concentration in the atmospheric air caused by the hydrogen leaking from the liquefied hydrogen pump 101 can be suppressed.

(7) A liquefied hydrogen pump system 100 according to a seventh aspect is the liquefied hydrogen pump system 100 of any one of (1) to (6) in which any one of the seal units 9A to 9E further includes an inert gas supply flow passage portion 96 which is formed in the cylinder 2 and through which an inert gas is supplied from the outside of the cylinder 2 to the gap S between the rod 8 and the cylinder 2 at a position between the first seal member 91 and the second seal member 92.

Accordingly, in a case where the inert gas is supplied from the outside of the cylinder 2 through the inert gas supply flow passage portion 96, the gap S between the rod 8 and the cylinder 2 at a position between the first seal member 91 and the second seal member 92 and the flow passage portion 95 communicating with the gap S can be filled with the inert gas. Therefore, since the liquefied hydrogen pump 101 in an initial state in which the operation thereof has not yet been performed is filled with the inert gas, the hydrogen flows into the inert gas containing no oxygen even in a case where the hydrogen flows into the gap S between the rod 8 and the cylinder 2. Accordingly, the hydrogen concentration in the atmospheric air does not reach the lower explosive limit and the liquefied hydrogen pump system can be safely operated.

(8) A liquefied hydrogen pump system 100 according to an eighth aspect is the liquefied hydrogen pump system 100 of (7) in which the inert gas has a specific gravity lower than that of atmospheric air and one end of the inert gas supply flow passage portion 96 communicates with the gap S between the rod 8 and the cylinder 2 at a position above one end of the flow passage portion 95.

Accordingly, in a case where the inert gas is supplied from the outside of the cylinder 2 through the inert gas supply flow passage portion 96, the atmospheric air present in the inert gas supply flow passage portion 96 and the gap S between the rod 8 and the cylinder 2 at that time is pushed downward with the supply of the inert gas. Therefore, the pushed atmospheric air is pushed to the outside of the liquefied hydrogen pump 101 from the gap S between the rod 8 and the cylinder 2 through the flow passage portion 95. Accordingly, the gas present in the liquefied hydrogen pump 101 can be efficiently replaced with the inert gas.

Helium can be exemplified as the inert gas having a specific gravity lower than that of the atmospheric air.

(9) A liquefied hydrogen pump system 100 according to a ninth aspect is the liquefied hydrogen pump system 100 of any one of (1) to (8) in which an interval D between the first seal member 91 and the second seal member 92 in the direction of the axis O is larger than a moving stroke of the rod 8 in the direction of the axis O.

Accordingly, since the interval D between the first seal member 91 and the second seal member 92 is made larger than the moving stroke of the rod 8, it is possible to inhibit foreign matter and the like, which are generated due to the sliding between the second seal member 92 and the rod 8, from reaching a sliding portion between the first seal member 91 provided below and the rod 8 in a case where the rod 8 is moved in the direction of the axis O. Therefore, it is possible to suppress damage to the first seal member 91 that is caused by the foreign matter and the like generated due to the sliding between the second seal member 92 and the rod 8. Further, it is possible to inhibit the foreign matter and the like, which are generated due to the sliding between the first seal member 91 and the rod 8, from reaching a sliding portion between the second seal member 92 and the rod 8. Therefore, it is possible to suppress damage to the second seal member 92 that is caused by the foreign matter and the like generated due to the sliding between the first seal member 91 and the rod 8.

(10) A liquefied hydrogen pump system 100 according to a tenth aspect is the liquefied hydrogen pump system 100 of any one of (1) to (9), further including: an atmospheric air flow portion 39 which is formed on a side of the second seal member 92 away from the piston 1 in the direction of the axis O and through which atmospheric air flows; and a dust seal 99 provided in the atmospheric air flow portion 39 and configured to cover the second seal member 92.

Accordingly, the dust seal 99 provided in the atmospheric air flow portion 39 can inhibit the foreign matter and the like, which are present in the atmospheric air flowing through the atmospheric air flow portion 39, from entering the gap S between the rod 8 and the second seal member 92.

(11) A liquefied hydrogen pump system 100 according to an eleventh aspect is the liquefied hydrogen pump system 100 of any one of (1) to (10), further including: an inner wall surface 94 that is formed in the cylinder 2 between the first seal member 91 and the second seal member 92 and is formed to be spaced apart from an outer peripheral surface of the rod 8 toward a radially outer side of the rod 8; and a recessed portion 300 that is formed at a lower portion of the inner wall surface 94 between the first seal member 91 and the second seal member 92 and is formed to be recessed from the inner wall surface 94 toward the radially outer side.

Accordingly, since the recessed portion 300 is provided at a lower position in the inner wall surface 94, the wear powder and the like of the second seal member 92 generated due to the sliding between the second seal member 92 and the rod 8 can be collected into the recessed portion 300. Accordingly, in a case where the rod 8 is moved in the direction of the axis O, it is possible to inhibit the foreign matter and the like, which are generated due to the sliding between the second seal member 92 and the rod 8, from reaching a sliding portion between the first seal member 91 provided below and the rod 8. Therefore, it is possible to suppress damage to the first seal member 91 that is caused by the foreign matter and the like generated due to the sliding between the second seal member 92 and the rod 8.

(12) A method for controlling a liquefied hydrogen pump system 100 according to a twelfth aspect is a method for controlling the liquefied hydrogen pump system 100 of any one of (1) to (11), the method including: a step of acquiring the information on the hydrogen concentration in the fluid flowing out of the cylinder 2 through the flow passage portion 95; Steps S13 and S23 of determining whether or not the hydrogen concentration in the fluid exceeds the preset reference value based on the acquired information on the hydrogen concentration; and Step S17 of stopping the operation of the liquefied hydrogen pump 101 in a case where it is determined that the hydrogen concentration in the fluid exceeds the preset reference value.

Accordingly, the information on the hydrogen concentration in the fluid flowing out of the cylinder 2 is acquired, and the operation of the liquefied hydrogen pump 101 is stopped in a case where it is determined, based on the acquired information on the hydrogen concentration, that the hydrogen concentration in the fluid exceeds the preset reference value. In a case where liquefied hydrogen leaks, a change in the hydrogen concentration is detected in this way, so that the hydrogen concentration in the surrounding atmospheric air can be suppressed to a value equal to or smaller than the predetermined reference value.

### Industrial Applicability

According to the liquefied hydrogen pump system and the method for controlling the liquefied hydrogen pump system of the present disclosure, it is possible to suppress a hydrogen concentration in the surrounding atmospheric air to a value equal to or smaller than a predetermined reference value by detecting a change in the hydrogen concentration in a case where liquefied hydrogen leaks.

### Description of Reference Signs

1 Piston
2 Cylinder
3 Drive unit
4 Casing
4t Upper surface
5 Check valve
6 Discharge pipe
7 Discharge valve
8 Rod
9A to 9E Seal unit
10 Piston body
11 Wear ring
12 Piston ring
20 Cylinder body
21 Compression chamber
31 Eccentric shaft part
32 Rotating body
33 Link unit
33a Upper annular part
33b Connecting part
33c Lower annular part
35 Swing shaft part
36 Crosshead
37 Housing
37a Top plate
37b Bottom plate
38 Wear band
39 Atmospheric air flow portion
39a Atmospheric air inlet
39b Atmospheric air outlet
41 Casing body
42 Supply pipe
43 Gas discharge pipe
44 Liquid storage chamber
45 Tubular portion
60 Control device
61 CPU
62 ROM
63 RAM
64 Storage
65 Communication module
71 Input unit
72 Pump control unit
73 Command signal output unit
90, 90E Seal unit body
90a Insertion tube portion
90b Enlarged-diameter portion
90m, 90n Groove
91 First seal member
92 Second seal member
94 Inner wall surface
95 Flow passage portion
95a One end
95b The other end
95p Pipe
95r Hydrogen collection unit
95v On-off valve
96 Inert gas supply flow passage portion
96a One end
96b The other end
96p Pipe
96v On-off valve
98 Heater
99 Dust seal
99a Fixed portion
99b Protruding portion
100 Liquefied hydrogen pump system
101 Liquefied hydrogen pump
200 Information acquisition unit
201 Flowmeter
202 Hydrogen concentration detection unit
203 Atmospheric air temperature detection unit
205 Thermometer
206 Thermometer
300 Recessed portion
300b Bottom surface
301 Guide portion
O Axis
S Gap

## Claims

1. A liquefied hydrogen pump system comprising:
a liquefied hydrogen pump configured to compress liquefied hydrogen; and
a control device configured to control an operation of the liquefied hydrogen pump,
wherein the liquefied hydrogen pump includes
a tubular cylinder extending in a direction of an axis,
a piston provided in the cylinder to be reciprocable in the direction of the axis, configured to compress the liquefied hydrogen introduced into the cylinder from an outside, and configured to discharge the liquefied hydrogen to an outside of the cylinder,
a rod of which one end is connected to the piston in the cylinder and the other end protrudes to the outside of the cylinder,
a drive unit connected to the other end of the rod and configured to cause the piston to reciprocate in the direction of the axis in the cylinder via the rod, and
a seal unit,
wherein the seal unit includes
a first seal member configured to seal a gap between the rod and the cylinder,
a second seal member provided at a distance from the first seal member in a direction away from the piston in the direction of the axis and configured to seal the gap between the rod and the cylinder,
a flow passage portion which is formed in the cylinder and of which one end communicates with the gap between the rod and the cylinder at a position between the first seal member and the second seal member, and the other end is open to the outside of the cylinder, and
an information acquisition unit configured to acquire information on a hydrogen concentration in a fluid flowing out of the cylinder through the flow passage portion, and
wherein the control device stops the operation of the liquefied hydrogen pump in a case where it is determined, based on the information on the hydrogen concentration acquired by the information acquisition unit, that the hydrogen concentration in the fluid exceeds a preset reference value.

2. The liquefied hydrogen pump system according to Claim 1,
wherein the information acquisition unit acquires a flow rate of the fluid as the information on the hydrogen concentration, and
wherein the control device stops the operation of the liquefied hydrogen pump in a case where the flow rate of the fluid is equal to or greater than a preset flow rate threshold.

3. The liquefied hydrogen pump system according to Claim 1 or 2,
wherein the information acquisition unit acquires a temperature of the fluid as the information on the hydrogen concentration, and
wherein the control device stops the operation of the liquefied hydrogen pump in a case where the temperature of the fluid is less than a preset temperature threshold.

4. The liquefied hydrogen pump system according to Claim 1 or 2,
wherein the seal unit includes an atmospheric air temperature detection unit configured to detect an atmospheric air temperature outside the cylinder, and
wherein the control device stops the operation of the liquefied hydrogen pump in a case where the atmospheric air temperature detected by the atmospheric air temperature detection unit is less than a preset atmospheric air temperature threshold.

5. The liquefied hydrogen pump system according to Claim 4,
wherein the seal unit further includes a heater configured to heat the second seal member, and
wherein the control device causes the heater to heat the second seal member in a case where the atmospheric air temperature detected by the atmospheric air temperature detection unit is less than the preset atmospheric air temperature threshold.

6. The liquefied hydrogen pump system according to Claim 1 or 2,
wherein the seal unit further includes a hydrogen concentration detection unit configured to detect a hydrogen concentration in atmospheric air outside the cylinder, and
wherein the control device stops the operation of the liquefied hydrogen pump in a case where the hydrogen concentration in the atmospheric air detected by the hydrogen concentration detection unit is equal to or greater than a preset hydrogen concentration threshold.

7. The liquefied hydrogen pump system according to Claim 1 or 2,
wherein the seal unit further includes an inert gas supply flow passage portion which is formed in the cylinder and through which an inert gas is supplied from the outside of the cylinder to the gap between the rod and the cylinder.

8. The liquefied hydrogen pump system according to Claim 7,
wherein the inert gas has a specific gravity lower than that of atmospheric air, and
wherein one end of the inert gas supply flow passage portion communicates with the gap between the rod and the cylinder at a position above one end of the flow passage portion.

9. The liquefied hydrogen pump system according to Claim 1 or 2,
wherein an interval between the first seal member and the second seal member in the direction of the axis is larger than a moving stroke of the rod in the direction of the axis.

10. The liquefied hydrogen pump system according to Claim 1 or 2, further comprising:
an atmospheric air flow portion which is formed on a side of the second seal member away from the piston in the direction of the axis and through which atmospheric air flows; and
a dust seal provided in the atmospheric air flow portion and configured to cover a gap between the rod and the second seal member.

11. The liquefied hydrogen pump system according to Claim 1 or 2, further comprising:
an inner wall surface that is formed in the cylinder between the first seal member and the second seal member and is formed at a distance from an outer peripheral surface of the rod toward a radially outer side of the rod; and
a recessed portion that is formed at a lower portion of the inner wall surface between the first seal member and the second seal member and is formed to be recessed from the inner wall surface toward the radially outer side.

12. A method for controlling the liquefied hydrogen pump system according to Claim 1 or 2, the method comprising:
a step of acquiring the information on the hydrogen concentration in the fluid flowing out of the cylinder through the flow passage portion;
a step of determining whether or not the hydrogen concentration in the fluid exceeds the preset reference value based on the acquired information on the hydrogen concentration; and
a step of stopping the operation of the liquefied hydrogen pump in a case where it is determined that the hydrogen concentration in the fluid exceeds the preset reference value.
